# EUROPEAN PATENT APPLICATION

(11) **EP 4 845 059 A1**
(43) Date of publication of application: **25.11.2026**
(21) Application number: 25741688.3
(22) Date of filing: 15.01.2025
(51) Int. Cl.: H04J 3/06

(54) **SYSTEM OF MULTIPLE, NANOSECOND-SYNCHRONISED, DISTANT, LOW-CONSUMPTION, GALVANICALLY INSULATED METERS FOR MEASURING HIGH-FREQUENCY ANALOGUE SIGNALS AND ASSOCIATED OPERATING METHOD**

(30) Priority: 16.01.2024 ES 202430032
(71) Applicant: Dxiot Systems S.L., 14005 Córdoba (ES)
(72) Inventor: DE PAZ FERNANDEZ, Francisco Javier, 45003 Toledo (ES); SANCHEZ URAN-GONZALEZ, Miguel Angel, 45008 Toledo Toledo (ES)
(74) Representative: Baños Treceño, Valentín
(86) International application number: PCT/ES2025/070016
(87) International publication number: WO 2025/153753

(57) **Abstract**

The present invention relates to an electronic system for measuring high-frequency analog signals (up to tens of MHz), comprising multiple measuring apparatuses (1), a concentrator device (2), and a fiber-optic interconnection between the latter and each of the former, with a star topology. The meters may be separated by distances of several kilometers from the concentrator device. This system is characterized by having an operating process that enables it to carry out scheduled measurements in all measuring apparatuses (1) at the same instant in time, with nanosecond precision, and to transmit, in real time and via the fiber-optic interconnection (3), the measurement data to the concentrator device (2) for subsequent analysis.

## Description

### FIELD OF THE TECHNOLOGY

The present invention belongs to the field of electronic engineering, electronic systems for measuring analogue signals, digital data transmission systems, IoT (Internet of Things) systems, and systems for time synchronisation in distributed measuring equipment.

The main purpose of the present invention is an electronic system for measuring high-frequency analogue signals (up to tens of MHz), comprising multiple measuring apparatuses (1), a concentrator device (2), and an optical-fibre interconnection between the former and each of the others, in a star topology. The meters may be separated from the concentrator device (2) by distances of several kilometres. This system is characterized by having an operating process, distributed among the measuring apparatuses (1) and the concentrator device (2), which makes it possible to carry out scheduled measurements in all the measuring apparatuses (1) at the same instant in time, with nanosecond accuracy, and to transmit in real time, via the optical-fibre interconnection (3), the measurement data to the concentrator device (2) for subsequent analysis.

Likewise, the operating process of the system is characterized by very low consumption on average in the measuring apparatuses (2), so that they can remain operational for several years using any system independent of the electrical grid as an energy source, such as a small battery.

Due to its characteristics, the system referred to in this invention fits within those commonly related to IoT (Internet of Things) technologies and, specifically, industrial IoT, or IIoT. Its main application is aimed at creating massive monitoring networks in which real-time measurements are required over long periods of time for industrial assets in operation.

### BACKGROUND OF THE INVENTION

Comprising sensors and devices that are interconnected with one another that make it possible to measure, collect, and send data to centralized systems, industrial asset monitoring networks, or infrastructures constitute one of the necessary tools for transforming the way in which industrial processes operate so that they are more flexible, scalable, efficient, and resilient.

The deployment of monitoring networks provides numerous advantages when applied to predictive or proactive maintenance strategies for monitored assets. The aim of such strategies is to keep the assets in operation for as long as possible, detecting any failure and its likely location in the shortest possible time and/or anticipating a possible failure based on the measurement and collection of a large number of aggregated measurements, continuously and with the asset in operation, in order to deduce significant patterns, trends, and actionable insights regarding the phenomena that generate the measured signals. In this way, corrective maintenance actions can be scheduled without affecting the production process or the provision of a service.

Industrial infrastructures are sometimes comprised of a large number of assets that may be the source and cause of failures and, in this situation, it is beneficial to use systems and solutions that allow for the permanent deployment of numerous electronic measuring devices in remote locations with the necessary functions to be able to perform different types of measurements on the assets. Furthermore, it is preferable for this deployment to be feasible not only in relation to a CAPEX objective or limitation, but also in relation to OPEX; that is, a system of meters with simple commissioning, high reliability, and low or zero maintenance.

Likewise, in this context, it is desirable for the measuring devices to have the technical and electronic capabilities to cover a wide variety of types of signals to be measured and high detection sensitivity for the signals within a broad range of operating frequencies, which should be at least up to 20 MHz. This characteristic will be better insofar as the device is highly immune to electromagnetic noise in the environment, is of relatively simple design, and has a pseudo-passive nature; that is, its consumption can be considered close to zero because its power-supply/consumption ratio allows it to operate for years without any operator intervention.

Measurement systems for high-frequency analogue signals (up to tens of MHz) are in common use and, today, do not represent a technical problem. With respect to the measuring apparatus (1), they are all based on analogue-to-digital converters (ADC) and they all have the characteristic of high energy consumption, which is assumed in the applications for which they are used; this factor gives them low operating autonomy and/or dependence on the electrical grid. It is preferable for this equipment to have a very low average consumption in order to provide more operating autonomy when powered, for example, by a small battery or by residual energy harvesting.

This low consumption is usually achieved because these systems carry out quick, sporadic measurements so that the average consumption can be made very low. In any case, the state of the art shows that combining low consumption with the measurement of high-frequency analogue signals (up to tens of MHz) is not always feasible, and, therefore, these systems are limited to low-frequency measurements (below 1 MHz).

An example of the state of the art for these devices is described in the patent US2010188239A1, published on 29 July 2010, entitled "Monitoring electrical assets for fault and efficiency correction", which covers an apparatus for monitoring an electrical asset in an electrical infrastructure that may have a sensor coupled with the electrical asset in order to obtain data corresponding to at least one of the voltage, current, and phase-angle waveforms in the low-frequency range, therefore understood as "low frequency". With regard to its operating autonomy and power supply, this is obtained by extracting energy directly from the asset by direct coupling, inductive coupling, capacitive coupling, or by any other means known to persons skilled in the technology, provided that such energy is available.

The arrangement of meters in multiple locations of an infrastructure with interconnected or related assets would occasionally make it possible to obtain measurements in different meters (at least two, and preferably more than two) of the same, more or less complex signal, having components over a broad high-frequency range with a possible shared origin. This circumstance would make it possible to perform calculations by applying, for example, Time of Flight (ToF) techniques of greater or lesser complexity, and would make it easier to locate the possible origin of the measured signal or signals, or other forensic calculations and analyses. To this end, it is not only desirable, but also necessary that all the meters involved carry out their measurements in a synchronised manner with respect to one another, and that the operating process of the synchronisation be efficient in terms of the required accuracy, energy consumption, and simplicity of implementation in the measuring devices.

The accuracy of this synchronisation would determine the system's capacity to determine the probable location of the origin of the signal or signals. This accuracy must make it possible to compare signals and phenomena that occur simultaneously, this simultaneity being understood in the field of electromagnetic signals and, therefore, signals that are produced at speeds close to the speed of light (200 meters per microsecond for displacement over optical fibres or over a coaxial cable). In order to obtain location discriminations on the order of meters, applying, for example, Time of Flight (ToF) techniques, synchronised measurements on the order of nanoseconds must be obtained.

The current state of the art establishes several possibilities for providing synchronised equipment that could be used, such as the Network Time Protocol (NTP), the Precision Time Protocol (PTP) originally standardized by IEEE 1588 (entitled "Standard for a Precision Clock Synchronization Protocol for Networked Measurement and Control Systems"), White Rabbit (WR), the IEEE 802.1AS standard, also known as Time-Sensitive Networking (TSN), and the "Inter-Range Instrumentation Group (IRIG) time codes" series of standards. These different time-synchronisation methods respond to the varied needs of industries, and the choice of the synchronisation method depends on factors such as accuracy requirements, network architecture, and the specific challenges posed by a given application. In general, most of them provide accuracy on the order of sub-microseconds (except WR, which provides nanoseconds) and establish generally complex implementation architectures that are acceptable in relation to the intended application or system, with high energy consumption and effective operating modes in Ethernet-type networks. Likewise, in the indicated synchronisation mechanisms, it is assumed that the data is time-stamped in the distributed element.

In the case of synchronisation systems based on GNSS (Global Navigation Satellite Systems), improvements can be made in terms of accuracy and ease of implementation at the cost of added complexity in the measuring device and additional energy consumption.

An example of the state of the art in relation to the synchronisation of distributed measuring equipment is described in patent US2013170507A1, published on 4 July 2013, entitled "Time Synchronization for Network Testing Equipment", which protects an improved device clock synchronisation mechanism adapted to large-scale distributed systems for monitoring and testing communication networks, based on the PTP/IEEE 1588 protocol.

Another example of the state of the art for the synchronisation of measuring devices is that described in patent US2010188239A1, referenced above, which covers a device for monitoring an electrical asset in an electrical infrastructure and which may have a sensor coupled with the electrical asset with GPS synchronisation or with a local timer, previously synchronised either with GPS or without this synchronisation and with synchronisation drifts admissible for the application expected from them. Likewise, this implementation determines that the time-stamping of a given measurement must be performed in the device itself.

It is therefore desirable for the synchronisation to provide high intrinsic accuracy, without the need for distributed time clocks synchronised in time, so that all the deployed measuring devices perform/initiate the measurements at the same instant (with nanosecond accuracy); so that, in the same process, the measurements are obtained by a central system to which all the measuring devices would be connected; and so that the central system performs the time-stamping of all measurements, with UTC time, either with local time or GNSS/GPS. In other words, all the measurements would be comparable relative to one another with nanosecond accuracy and absolute on the UTC time scale, with the time stamp.

### EXPLANATION OF THE INVENTION

The main characteristic of the invention is to address the challenge of combining high-frequency measurements, which entail high energy consumption, with an average consumption on the order of milliwatts so as to be compatible with the power supplied by a small battery, while, at the same time, measurements are carried out with several meters with nanosecond accuracy so that Time of Flight (ToF) techniques can be applied with accuracies of a few metres for signals to be measured with electromagnetic propagation.

In an alternative version, the battery power supply may be supplemented or replaced by any high-availability and autonomous power source, such as energy from small solar- or wind-powered systems.

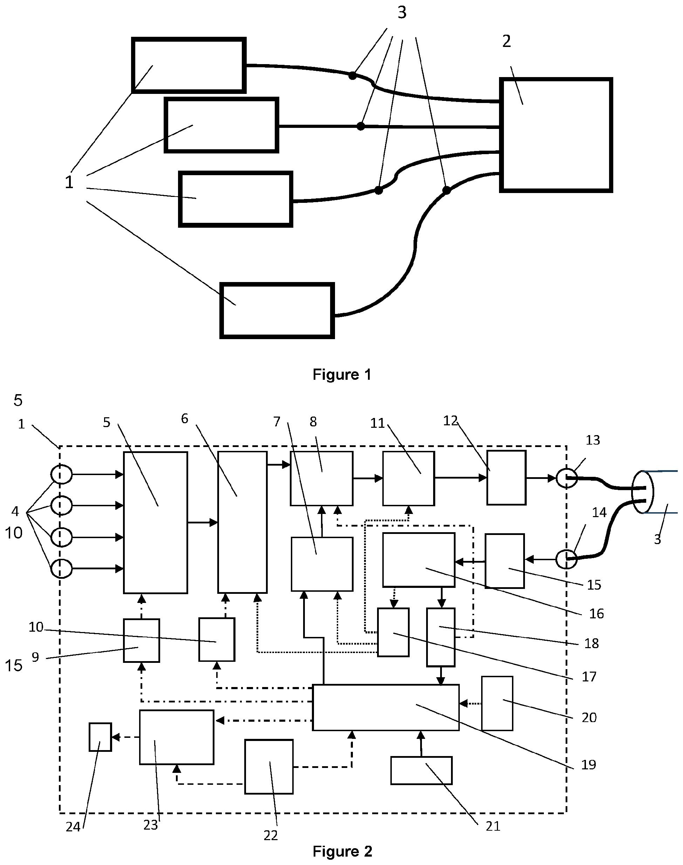

The system is arranged in a "star" configuration, as shown in Figure 1, where there is a central element, herein referred to as the concentrator device (2), which communicates by means of a "point-to-point" fibre optic interconnection (3) with each of the measuring apparatuses (1) connected thereto. The meters are responsible for carrying out the measurements, and the concentrator device (2) gives the order to the meters to start a measurement and will collect the measurements from all the meters, using the synchronisation mechanism implemented in all the meters.

In an alternative version, the point-to-point interconnection topology by means of individual optical fibres between the meters and the concentrator device (2) may be implemented by point-to-point connections over different wavelengths on one and the same single optical fibre, using passive optical add/drop multiplexing equipment.

In order for the interconnection between each meter and the concentrator device (2) to have sufficient bandwidth, the interconnection between them is optical fibre, whereby galvanic isolation is also achieved between each meter and the rest of the system. The use of optical fibre makes it possible for the measuring apparatuses (1) to be separated from the concentrator device (2) by distances from metres to tens of kilometres, depending on the fibre-optic technology that is to be used. As described in the "Preferred embodiment of the invention" section, this implementation is perfectly compatible with the previously indicated average consumptions on the order of milliwatts.

In order to make the invention operational, its structure is symbolically depicted in blocks, as shown in Figure 2, for the measuring apparatuses (1). In Figure 2, data flows are shown with solid black lines, control flows are shown with black dash-dot lines, and clocks are represented by black dotted lines (for simplicity, not all of the interconnections are shown, but only the fundamental ones).

There are two clearly differentiated paths in the data flow:
- Data flow from the concentrator device (2) to the measuring apparatus (1). The information, optical and in digital format, enters through the fibre-optic input block of the measuring apparatus (14), is passed through an optical-to-electrical input conversion block of the measuring apparatus (15), and passes through a deserialiser block of the measuring apparatus (16) which, in addition, can recover the fundamental clock on which the transmission is being carried out, since the concentrator device (2) will make use of a transmission protocol that offers this possibility (this transmission protocol, with the ability to transmit synchronisation, may be one of the standards commonly used. A possible solution is indicated in the "Preferred embodiment of the invention" section). The message decoding block of the measuring apparatus (18) already has clean and error-free information that can be used by the microcontroller of the measuring apparatus (19) to operate appropriately. The message decoding block of the measuring apparatus (18) also has direct control over the signalling/data switching block of the measuring apparatus (8), which will be discussed later; in this way, control over said switching is performed without any intervention from the microcontroller of the measuring apparatus (19) and is therefore very fast. Since the deserialiser block of the measuring apparatus (16) also recovers the synchronisation of the concentrator device (2), it can be used to be sent to the secondary-clock generator block of the measuring apparatus (17), which feeds all the elements that subsequently take part in the transmission process and which will be discussed in the other data flow. The microcontroller of the measuring apparatus (19) is constantly powered from the energy block of the measuring apparatus (22), but in a Rest State (100) (discussed later) so that its consumption is ultra-low. The time it remains in this phase is controlled by the microcontroller of the measuring apparatus (19) itself. The accuracy of the duration of this rest state is important, since it is what can ensure that all meters leave the rest state at the same time. For this reason, the microcontroller of the measuring apparatus (19) has a clock block on the microcontroller of the measuring apparatus (20), which, in addition to being low consumption, must have a time drift compatible with all the measuring apparatuses (1) leaving the Rest State (100) at the same time, within a range of milliseconds. The performance is specified in the "Preferred embodiment of the invention" section. The microcontroller of the measuring apparatus (19) is also responsible for ordering the process of switching on the power-supply regulator control block of the measuring apparatus (23) over the power-supply regulator block of the measuring apparatus (24) when a measurement is to be carried out and the measuring apparatus (1) passes to an Active State (101). When all the elements of the meter that take part in the measurement have finished switching on, the microcontroller of the measuring apparatus (19) configures the:
   - conditioning of the measuring apparatus's analogue signal (5) through an analogue-signal conditioning control block of the measuring apparatus meter (9)
   - control of the ADC block of the measuring apparatus (6) through the ADC control block of the measuring apparatus (10)
   - configuration of the measuring apparatus's signalling generator block messages (7), which must be sent in each situation and at each time. Finally, in order to prevent the meter from being left out of control, for example, due to poor configuration from the concentrator device (2), the measuring apparatus (1) has a cyclic reset block (21), independent of the microcontroller of the measuring apparatus (19). This reset can be configured to run periodically, ranging from several hours to several days.
- Data flow from the measuring apparatus (1) to the concentrator device (2). The information, both in optical and in digital format, is arranged in the fibre-optic output block of the measuring apparatus (13), having previously passed through the electrical-optical output conversion block of the measuring apparatus (12). The preceding step was the serialiser block of the measuring apparatus (11). The signalling/data switching block of the measuring apparatus (8) decides whether the upstream data flow comes from the ADC block of the measuring apparatus (6) or from the message configurator of the signalling generator block of the measuring apparatus (7). If the data flow comes from the ADC block of the measuring apparatus (6), it will have obtained the data in analogue format from the analogue-signal conditioning block of the measuring apparatus (5), which may come from one or several analogue inputs from the analogue input block of the measuring apparatus (4), according to how the final invention is ultimately executed. If the signalling/data switching block of the measuring apparatus (8) is configured so that the information comes from the message configurator of the signalling generator block of the measuring apparatus (7), then the information will be in signalling format and, when it reaches the concentrator device (2), may be interpreted as such. It can also be observed from Figure 2 that the clocks of the ADC block of the measuring apparatus (6), the message configurator of the signalling generator block of the measuring apparatus (7), the signalling/data switching block of the measuring apparatus (8), and the serialiser block of the measuring apparatus (11) are generated by the secondary-clock generator block of the measuring apparatus (17), and all of them are multiples or submultiples of the same clock. This reference clock is obtained from the deserialiser block of the measuring apparatus (16), and this clock is involved in the synchronisation obtained from the transmission protocol by which the concentrator device (2) communicates with the meters. Since the clock linkage extends from the sampling of the analogue signal to its serialisation, the data received by the concentrator device (2) from all the meters are obtained with a single clock, derived from the synchronisation received by all the meters from the concentrator device (2) itself. This is an important feature, since the drift due to differences among clocks in the meters is zero. All measurements received from all analogue channels of all meters are comparable relative to one another and absolute on the time scale.

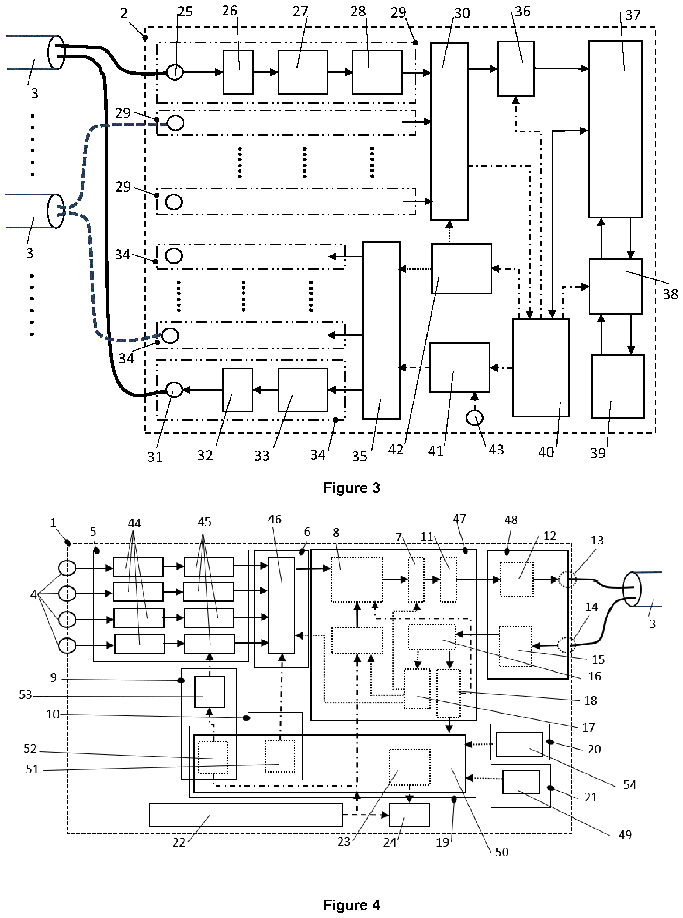

In order to make the invention operational, a symbolic block structure is laid out, as shown in Figure 3, for the concentrator device (2). In Figure 3, data flows are marked with solid black lines, control flows are marked with black dash-dot lines, and clocks are marked with black dotted lines.
- Data flow from the measuring apparatus (1) to the concentrator device (2). The information, in both optical and digital format, enters through the fibre-optic input block of the concentrator device (25), passes through an optical-electrical input conversion block of the concentrator device (26), and passes through a deserialiser block of the concentrator device (27). The transmission protocols are the same from the concentrator device (2) to the meter as from the meter to the concentrator device (2) (although the transmission frequency may be different, and the specific case that has been implemented is discussed in the "Preferred embodiment of the invention" section). In any case, the protocol enables recovery of the clock in the deserialiser block of the concentrator device (27), as well as the decoding of messages/data through the message/data decoder block of the concentrator device (28). As shown, these aforementioned blocks are similar to the information-reception blocks of the measuring apparatus (1), discussed above. These blocks constitute what is herein referred to as the reception block of the concentrator device (29), which will be connected through the optical-fibre interconnection (3) with the measuring apparatus (1). As shown in Figure 3, there are several reception blocks of the concentrator device (29), each of which can be connected by means of a fibre optic interconnection (3) with a measuring apparatus (1). The maximum number of meters that can be connected depends on the specific embodiment implemented, and one possible case is addressed in the "Preferred embodiment of the invention" section.
   The data collected by each reception block of the concentrator device (29) are fed into the sample packaging block of the concentrator device (30). This packaging is performed sample by sample, such that each data packet contains all the samples from all the meters in all their measurement channels at a specific instant in time.
   The sample packaging block of the concentrator device (30) also detects the start of the arrival of measurement data from each meter and, as indicated above, determines when a measurement begins and the arrival delay of the measurement data from each meter. This is very important because it is the basis for being able to correct time offsets due to the length of the fibre optic interconnection (3) and to establish a single and absolute time base for all the meters. The data reflecting the calculation of these offsets remain available in the sample packaging block of the concentrator device (30) and may be read by the microprocessor block of the concentrator device (40) when the measurement process ends.
   The data flow toward the concentrator device (2) is completed by feeding the data into the memory through the memory block of the concentrator device (37), with sufficient capacity and speed (the sizing and its characteristics based on each case are addressed in the "Preferred embodiment of the invention" section). In order to facilitate the data flow toward the memory block of the concentrator device (37) and make it viable, it is established that several direct memory access (DMA) processors will be used; specifically, the DMA for measurement input to memory (36) is responsible for transferring the information available in the sample packaging block of the concentrator device (30) to the memory block of the concentrator device (37). Control and supervision of this DMA will be performed by the microprocessor block of the concentrator device (40).
- Data flow from the concentrator device (2) to the measuring apparatus (1). The information, in both optical and digital format, exits through the fibre-optic output block of the concentrator device (31), having previously passed through the electrical-optical output conversion block of the concentrator device (32). The preceding step was the data serialiser block of the concentrator device (33). As can be observed, these blocks are similar to the information-emission blocks of the meter, previously discussed. These three blocks constitute what is herein referred to as the emission block of the concentrator device (34), which will be connected through the fibre optic interconnection (3) with the measuring apparatus (1). In Figure 3, it is shown that there are several emission blocks of the concentrator device (34), each of which can be connected by means of a fibre optic interconnection (3) with a measuring apparatus (1). The maximum number of meters that can be connected depends on the specific embodiment implemented, and one possible case is addressed in the "Preferred embodiment of the invention" section.
   The information transmitted through each emission block of the concentrator device (34) is identical and is formed in the signalling generator block of the concentrator device (35); that is, all the meters receive the same information. The information emitted will allow the meters to carry out the measurement and, further discussed later, consists of:
      - A time reference indicating when the next measurement will be carried out
      - An immediate measurement-start signal
      - Information relating to the configuration of the analogue stages of each meter
   This block also prepares the network protocol that subsequently enables the recovery of the transmission clock by the meters.
   In order to perform its time-related functions, the signalling generator block of the concentrator device (35) relies on the synchronisation block of the concentrator device (41), which uses a measurement schedule supplied to it by both the microprocessor block of the concentrator device (40) and the external time-signal block of the concentrator device (43) to determine a universal time.
   The signalling generator block of the concentrator device (35) also requires a clock supplied by the clock generator block of the concentrator device (42). This clock is fundamental because every transmission from the concentrator device (2) is based on it, and it is recovered by the measuring apparatuses (1) and, therefore, used for sampling and the transmission of the analogue signals, so it will also be used for alignment in the sample packaging block of the concentrator device (30).
   Once the measurement data have been established in the memory block of the concentrator device (37), they will be made available through the external-access interface block of the concentrator device (39). The DMA block for external-interface access of the concentrator device (38) enables access to this information with minimal intervention by the microprocessor block of the concentrator device (40).
   The memory block of the concentrator device (37) also serves as a status and control area for the concentrator device (2), such that an area of the memory is reserved for this function, and the microprocessor block of the concentrator device (40) will write therein the status of the measurements and other information of interest. Meanwhile, the DMA block for external-interface access of the concentrator device (38), also accessing this memory area, may consult the status of the measurements and order the mode and manner of carrying out the following measurements.

Having discussed the structure of the elements that constitute this invention, the process that provides the invention with its distinguishing characteristics will now be explained.

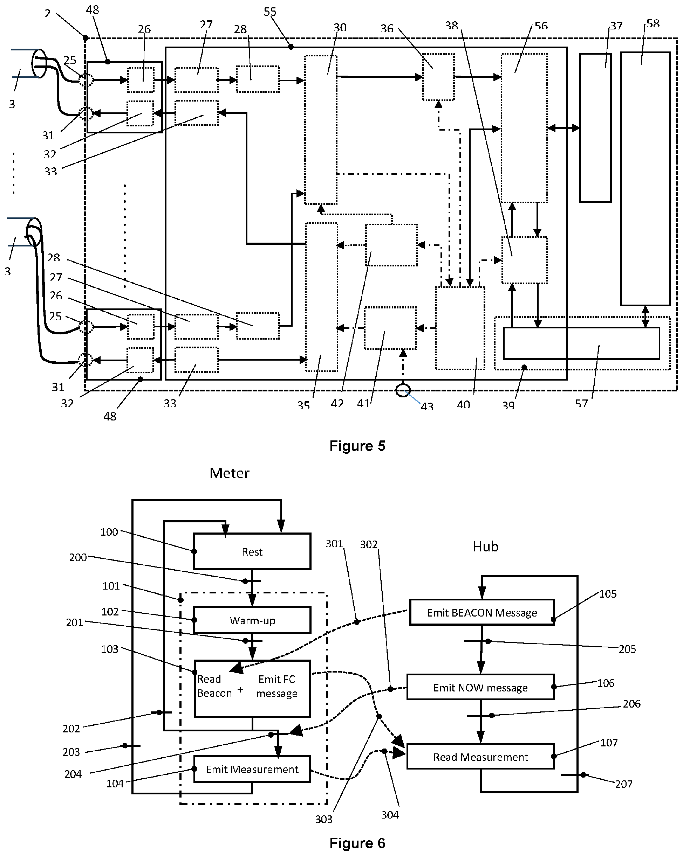

The process is based on a series of states through which the measuring apparatus (1) and the concentrator device (2) will pass, as well as a series of messages exchanged between them. These states, as well as their transitions and messages, are described below and illustrated in Figure 6.

The messages exchanged are:
- Beacon Message (301): This message is emitted by the concentrator device (2) and indicates to the measuring apparatuses (1) how much time remains (in milliseconds) until the next measurement is carried out. This information is constantly updated. Most of the time, this message will not be useful because the meters will be in rest state (100) and therefore will not attend to it; however, if any meter leaves the rest state (100), that meter may interpret this beacon message (301) and determine by itself whether it has been activated at the correct time, in which case it will remain in the active state (101), or, conversely, if the measurement is to be carried out later, it will return to the rest state (100), but knowing exactly when it must reactivate. This message also contains configuration information for all the meters and, although all of them receive it, each one uses the information most pertinent to it.
- NOW Message (302): This message is emitted by the concentrator device (2) and indicates to the measuring apparatuses (1) that, at that instant, they must start sending the measurement information exactly as it is being captured at that instant by the ADC block of the measuring apparatus (6).
- FC Message (303): This message is emitted by each measuring apparatus (1) and indicates to the concentrator device (2) that that meter is active and available to proceed to send measurement data.
- Measurement Data Message (304): This message is emitted by each measuring apparatus (1). The concentrator device (2) identifies this message as measurement data.

The states of the measuring apparatus (1) are as follows:
- Active State (101): State of the measuring apparatus (1) in which the measurement will be carried out; energy consumption is high (the meter will remain in this state for a short time).
- Rest State (100): State of the measuring apparatus (1) in which it will be waiting to carry out a new measurement; energy consumption is very low (the meter should spend most of the time in this state).
- Warm-Up Phase (102): This is the first phase of the active state (101). It enters this state from the rest state according to the transition (200) indicated in Figure 6. This transition is brought about in two ways:
   - timing of the meter itself. The duration of this timing was set by the Beacon Message (301) the last time this measuring apparatus (1) was active
   - by activation from the cyclic reset (21).
   In this phase, the hardware elements of the measuring apparatus (1) are activated, configured, and verified.
- Beacon Reading Phase (103): This is the second phase of the active state (101). It is entered from the warm-up phase (102) according to an automatic transition (201), which occurs if the entire warm-up phase (102) has been correct. In this phase, the Beacon Message (301) is read, such that the measuring apparatus (1) can determine whether an imminent measurement is to be carried out, for which it will wait to receive the NOW Message (302), in which case the transition (204) will occur; or, conversely, if the measurement is not imminent, the transition (202) is self-generated, whereby it will pass to rest state (100). Throughout the entire beacon reading phase (103), the meter also emits the FC Message (303), such that the concentrator device (2) may know that this meter is ready and operational to receive the NOW Message (302).
- Measurement Emission Phase (104): This is the third phase of the active state (101). It is entered from the beacon reading phase (103) if and only if the measuring apparatus (1) receives a NOW Message (302). In this phase, the meter stops emitting the FC Message (303) and begins to emit the measurement data message (304). The concentrator device (2) recognises this change of messages and acts as indicated below. The measurement emission phase (104) ends automatically with the transition (203) to return to the rest state (100). The change to the transition (203) is determined by the content of the NOW Message (303), which contains the duration of the measurement emission phase (104).

The states of the concentrator device (2) are as follows:
- Beacon Emission State (105): State of the concentrator device (2) in which it sends to all the measuring apparatuses (1) how much time, in milliseconds, remains for them to carry out the next measurement, which is done by emitting the beacon message (301). The time indicated by the beacon message is constantly recalculated and the updated time is sent. The time is calculated based on a measurement schedule managed by the central processing block (58) and the external time-signal block of the concentrator device (43); therefore, it can be updated and managed by the system user. The concentrator device (2) exits this state upon transition (205). This transition (205) is generated either automatically when it coincides with the time scheduled for carrying out the measurement or, additionally, in accordance with the external time-signal block of the concentrator device (43).
- NOW Message Emission State (106): State of the concentrator device (2) in which it sends to all the measuring apparatuses (1), by means of the NOW Message (302), the order for them to start emitting the measurement data. This message is sent only once and will be the temporal reference for all measurement data emitted by each of the meters. The concentrator device (2) exits this state (106) automatically upon transition (206) when the time needed to emit the message has elapsed.
- Read Measurement State (107): State of the concentrator device (2) in which it waits to receive the measurement data messages (304) from all the measuring apparatuses (1). In this state, the type of message sent by each meter is monitored. At the beginning of the state, FC Messages (303) must be received from all meters, since no meter will have had time to send measurement data messages (304). In principle, the closest meter (in terms of fibre optic interconnection distance), referred to as M1, will be the first to send measurement data messages to the concentrator device (2). This instant will mark the reference time for the rest of the meters. The time taken for the measurement data messages (304) from the rest of the meters, referred to as Mj, to arrive will be a linear function with respect to the increase in distance (in metres of optical fibre) from meter M1 to each meter Mj. In this read measurement state (107), the concentrator device (2), from the moment the data from M1 arrives, introduces the information it receives from all the meters (M1 and all Mj) into the memory block of the concentrator device (37). It should be noted that information is also entered into the memory for the meters that are still sending FC Messages (303), but this information is marked as such and will subsequently be used to calculate the delay time among meters and, in turn, to compensate for it in order to provide a unified time base for all samples arriving from all meters.
The concentrator device (2) exits this state (107) automatically upon transition (207) when the time that had been indicated in the NOW Message (302) as the duration of the measurement has elapsed. The transition (207) returns the concentrator device (2) to the beacon message emission state (105), and the cycle can begin again.

### BRIEF DESCRIPTION OF THE DRAWINGS

In order to supplement the description provided and to aid in a better understanding of the characteristics of the invention, a set of drawings is attached as an integral part of said description, in which the following has been represented by way of illustration, but not limited to such:
- Figure 1. -: Shows the basic architecture of the invention.
- Figure 2. -: Shows the architecture of the measuring apparatus (1) of the invention.
- Figure 3. -: Shows the architecture of the concentrator device component (2) of the invention.
- Figure 4. -: Shows the composition of the measuring apparatus (1) for the preferred embodiment of the invention
- Figure 5. -: Shows the composition of the concentrator device (2) for the preferred embodiment of the invention
- Figure 6. -: Shows the processes and operating states of the measuring apparatus (1) and of the concentrator device (2), how they interact, and transitions between their states.

### PREFERRED EMBODIMENT OF THE INVENTION

There are multiple ways of carrying out the invention, because the different conditions of use intended to be achieved lead to different embodiments.

A preferred embodiment is set out below, aimed at obtaining meters with an average consumption on the order of milliwatts, powered by a battery with autonomy of more than 10 years, and carrying out measurements with a duration on the order of tens of milliseconds, at intervals of several minutes. These conditions of use are suitable, for example, for systems that monitor the condition of assets and installations in different fields, such as mechanical, electrical, chemical, energy, and so on, where it is beneficial to have a low-maintenance system in which the signals to be monitored are not highly dependent on the exact moment at which the specific measurement is made. The details of the embodiment proposed herein are shown in Figures 4 and 5.

Figure 4 shows the embodiment with respect to the measuring apparatus (1). Several electronic components are integrated, which are described below:
- The meter has four analogue inputs in the analogue input block of the measuring apparatus (4). The analogue-signal conditioning of the measuring apparatus (5) is performed, for each analogue input on the analogue input block of the measuring apparatus (4), by means of a low-noise differential amplifier, model LTC6403 (44), followed by a variable-gain amplifier, model AD8330 (45), which achieves a bandwidth of 20 MHz.
- Next, the ADC block of the measuring apparatus (6)-specifically a four-channel, 12-bit ADC-is activated with a sampling frequency of 50 MSPS and serialised digital output (46), model AD9633.
- The blocks: the signalling/data switch of the measuring apparatus (8), signalling generator of the measuring apparatus (7), serialiser of the measuring apparatus (11), deserialiser of the measuring apparatus (16), message decoding of the measuring apparatus (18), and the secondary-clock generator of the measuring apparatus (17), have been integrated into an FPGA of the measuring apparatus, model M2GL010T (47), which enables the aforementioned blocks to be implemented.
- One of the transceivers of the FPGA of the measuring apparatus (47) is used to connect an SFP+ module (48) in which the following blocks are integrated: electrical-optical output conversion block of the measuring apparatus (12), fibre-optic output block of the measuring apparatus (13), fibre-optic input block of the measuring apparatus (14), and optical-electrical input conversion block of the measuring apparatus (15). The SFP+ (48) may be any of the many available on the market, but they must have the same characteristics as those provided in the concentrator device (2) (which, as mentioned below, also include SFP+).
- The microcontroller block of the measuring apparatus (19) is implemented by means of an 8-bit microcontroller model, specifically the EFM8 model (50) of the "Sleepy Bee" series. Within this microcontroller, and through one of its SPI interfaces (51), the ADC control block of the measuring apparatus (10) is implemented. With another SPI interface (52), the analogue-signal conditioning control block of the measuring apparatus's meter (9) is implemented through a DAC (digital-analogue converter), specifically model MCP48FVB08 (53), which, with its eight outputs, allows for the control of 4 analogue channels. This block also implements the power-supply regulator control block of the measuring apparatus (23).
- The clock block of the microcontroller on the measuring apparatus (20) is implemented through the SiT1533 oscillator model (54) at 32.768 kHz, with a frequency stability of 20 ppm. This can guarantee, for example, differences of less than 12 milliseconds for a rest-state time (100) of 10 minutes.
- The cyclic reset block (21) has been implemented in this embodiment by means of a low-consumption CPLD, specifically model SLG46824V (49).

With these components, powered with a 3.6 V source, the meter in rest state can consume around 20 microamperes, and in active state around 500 milliamperes. As an example of use: proposing an operating mode such that the active state is around 0.01% of the rest state (which is equivalent to being active for 100 milliseconds every 500 seconds), there is an average consumption of 120 microamperes (430 microwatts), which, for a 3.6 V lithium battery, standard size D, with a capacity of about 13 Ah (ampere-hours), achieves an estimated battery life of approximately 12 years. These conditions of use may be compatible with many monitoring systems, while achieving maintenance that can be considered negligible with regard to battery replacement. Of course, this mode of use is only one of the possible modes of this embodiment, and the measuring apparatus (1) is configurable because its operating guidelines are constantly set from the concentrator device (2).

Figure 5 shows the embodiment with respect to the concentrator device (2). Several electronic components are integrated, which are described below:
- Arria 10 (55): Most of the elements constituting the concentrator device (2) have been integrated within an Arria 10 model FPGA. The Arria 10 model may have up to 24 transceivers compatible with the transmission emitted and received from the meters. In this embodiment, up to 22 of these 24 transceivers may be used, since the other 2 are reserved for the PCI-express interface (PCIe), as detailed below. Within the Arria 10, the following blocks have been instantiated: deserialiser of the concentrator device (27), message/data decoder of the concentrator device (28), sample packager of the concentrator device (30), data serialiser of the concentrator device (33), signalling generator of the concentrator device (35), DMA for Measurement Input to Memory (36), DMA for external-interface access of the concentrator device (38), microprocessor block of the concentrator device (40), synchronisation of the concentrator device (41), clock generator of the concentrator device (42), and external-access interface of the concentrator device (39). A PCI-e has been selected as the external interface, which is commonly available in many processor systems. The DDR Memory Access Manager (56) is also integrated within the Arria 10. Said DDR memory is mentioned below. Finally, the external-access interface block of the concentrator device (39) has been implemented as a two-lane PCIe (57) interface (PCIe x2).
- SFP+ (48): The 22 transceivers mentioned above are connected to the same number of SFP+ (48) modules compatible with those installed in the measuring apparatuses (1). These SFP+ modules house the following blocks: fibre-optic input of the concentrator device (25), optical-electrical input conversion of the concentrator device (26), fibre-optic output of the concentrator device (31), and electrical-optical output conversion of the concentrator device (32).
- Memory block of the concentrator device (37): The concentrator device (2) also has a DDR-type memory, not counting the memory that the central processing block (58) will have. The dimensions of this memory depends on the measurement needs, taking into account the length (in samples) of the measurement and the number of meters. As an example, with 1 gigabyte of DDR memory and the 22 meters operating with 4 channels each, up to more than 5 million samples may be available in each of the meters.
- The central processing block (58): A PC-type system has been implemented for this function, but any other system with a PCIe interface in Root mode may be used.
- Optionally, an input is provided for an external time signal through the external time-signal block of the concentrator device (43), such as GPS, which allows the concentrator device (2) to unify its time base with respect to a universal system (for example, UTC), also with nanosecond accuracy through the PPS (Pulse Per Second) signal that these GPS systems already commonly provide.

The fibre optic interconnection (3) used in this embodiment must be in accordance with the SFP+ (48) installed in the measuring apparatus (1) and in the concentrator device (2). The choice of all of them will depend on the distance separating each meter from the concentrator device (2), for which the specifications of the SFP+ manufacturers must be observed. The market offers solutions for reaching distances of tens of kilometres, compatible with the energy consumptions proposed above.

To finish specifying this embodiment, some parameters of some of the critical components that justify the operability of the embodiment will now be defined:
- The following criteria of use are taken as a starting point: N=22 meters connected to the concentrator device (2), ADC operating with Ch=4 channels at a sampling speed of S=50 MSPS (megasamples per second) and with a resolution of B=12 bits.
- The bit-coding system is selected with the condition set out in previous paragraphs, namely that the receiver of the coding can extract the clock of the transmitter. 8B10B coding is selected because it is commonly used and is available as a feature in the transceivers incorporated both in the FPGA of the meter's measuring apparatus (47) and in the Arria 10 of the concentrator device (55). This coding has an efficiency of R=80%.
- Memory access speed: Vm=N·Ch·S·B=22·4·50M·12=52800 Mbps = 6600 MBps (megabytes per second). Multiple solutions exist, but by way of example, with a DDR4-1600 memory with a 64-bit bus, a speed of 12800 MBps (>6600 MBps) is already achieved, and also with a DDR4-1866 with a 32-bit bus, a speed of 7500 MBps (>6600 MBps) is achieved.
- Transmission speed (Vm) from a measuring apparatus (1) to the concentrator device (2): It is sized to make it is feasible to send, without loss of information, the data generated by the measuring apparatus (1) according to the conditions mentioned above. Vm=Ch·S·B/R=4·50M·12/0.8=3 Gbps (gigabits per second). This speed is compatible with the transceivers incorporated both in the FPGA block of the measuring apparatus (47) of the meter and in the Arria 10 (55). This speed Vm is also compatible with the SFP+ standard (48), which can support up to 10 Gbps.
- Transmission speed (Vc) from the concentrator device (2) to the measuring apparatuses (1): It is sized so that the reference clock for the meter can be easily recovered. With Vc=2 Gbps, 8B10B coding recovers a 200 MHz clock, from which the 50 MHz clock for the ADC block of the measuring apparatus (6) is directly derived.

As can be observed, the system is perfectly achievable with currently available technologies, based on commercial components, and, in many cases, on well-established standards widely used in the field.

## Claims

1. Process for controlling the cyclical evolution of operating states of a system of multiple measuring apparatuses (1), connected to a concentrator device (2), comprising the following states and transitions:
a. A Beacon Emission state (105) in the concentrator device (2), in which the concentrator device (2) periodically broadcasts a Beacon Message (303) containing information, updated in each broadcast period, on the time remaining, in milliseconds, until the start of the next measurement, said time being recalculated for each broadcast period on the basis of the time programmed for the execution of the next measurement, said time being stored internally in the memory of the concentrator device (2) and being updatable and manageable by the user of the system, and an external time-signal reference available to the concentrator device (2), and whose message will be received and interpreted by the measuring apparatuses (1) when they leave a Rest State (100),
b. A NOW Message Emission state (106) in the concentrator device (2), to which it passes by means of a transition (205) from a Beacon Emission state (105) of the concentrator device (2), said transition being generated automatically when the planned time instant for carrying out the measurement has been reached, and in which NOW Message Emission state (106), the concentrator device (2) simultaneously sends a single NOW Message (302) to all the measuring apparatuses (1), said message providing them with information on the time, in milliseconds, for which the measurement is to last,
c. A Read Measurement state (107), in the concentrator device (2), to which it passes by means of a transition (206) from a NOW Message Emission state (106), said transition being generated automatically once the emission of the NOW Message (302) has finished, and from which Read Measurement state (107) the concentrator device (2) exits in order to pass to a Beacon Emission state (105), by means of a transition (207), which is generated automatically once the measurement duration time has elapsed, thereby starting again the emission of the Beacon Message (301), which at that instant contains the updated value of the time remaining until the next measurement, said time being obtained from the measurement-time schedule stored internally in the memory of the concentrator device (2),
d. A Rest State (100) of the measuring apparatuses (1), with very low consumption on the order of 20 microamperes, in which state they may remain for a time on the order of minutes, the same for all of them, awaiting the next measurement, said time having been previously stored by each measuring apparatus (1) the last time it was in an Active State (101), through the information contained in a Beacon Message (301), broadcast by the concentrator device (2),
e. An Active State (101) in the measuring apparatuses (1), with consumption on the order of hundreds of milliamperes, in which state they may remain for a time on the order of milliseconds, the same for all of them, and within which time all the measuring apparatuses (1) will perform a measurement, send the measurement data to the concentrator device (2) and, lastly, update in their memory the time for which they must remain in the Rest State (100), while waiting for the next measurement to be carried out, and which state in turn comprises three consecutive phases: a Warm-Up Phase (102), a Beacon Reading Phase (103) and a Measurement Emission Phase (104),
f. A Warm-Up Phase (102) in the measuring apparatuses (1), the first phase of an Active State (101), to which all the measuring apparatuses (1) pass simultaneously and autonomously, with millisecond accuracy, by means of a transition (200), from a Rest State (100), said transition being generated in two ways:
i. by timing in each measuring apparatus (1), timing which was set in each of them through the information contained in a Beacon Message (301), broadcast by the concentrator device (2) when it is in a Beacon Emission state (105), and which was interpreted and stored by each measuring apparatus (2) the last time it was in the Active State (100),
ii. or by activation of the cyclical reset (21),
g. A Beacon Reading Phase (103) in the measuring apparatuses (1), the second phase of an Active State (101), to which all the measuring apparatuses (1) pass simultaneously and autonomously, by means of a transition (201), from the Warm-Up Phase (102), said transition being generated automatically if the Warm-Up Phase (102) has been correct, and in which Beacon Reading Phase (103) each measuring apparatus (1) detects the presence of the Beacon Message (301) broadcast by the concentrator device (2), reads it and obtains a time value, in milliseconds, remaining until a measurement is to be carried out, in such a way that:
i. if this time is greater than a few tens of milliseconds, or the Beacon Message (301) has not been read correctly, transition (202) is generated and the measuring apparatus (1) returns to a Rest State (100), in which case the measuring apparatus (1), upon returning to a Rest State (100), will do so with a rest time equal to the time value contained in the most recent correct Beacon Message (301),
ii. if this time is less than a few tens of milliseconds, the measuring apparatus (1) remains waiting to receive a NOW Message (302) from the concentrator device (2),
h. A Measurement Emission Phase (104) in the measuring apparatuses (1), the third phase of an Active State (101), to which all the measuring apparatuses (1) pass, by means of a transition (204), from the Beacon Reading Phase (103), said transition being generated provided that the measuring apparatus (1) has received and interpreted a NOW Message (302) emitted by the concentrator device (2), said message containing information on the measurement duration time, and from which Measurement Emission Phase (104) each measuring apparatus (1) exits in order to pass to a Rest State (100), by means of a transition (203), which is generated automatically once the measurement duration time has elapsed,

2. The process according to claim 1, **characterized in that**, in the final part of the time during which each measuring apparatus (1) is in a Measurement Emission Phase (104), and instants before each measuring apparatus (1) passes to a Rest State (100) by means of a transition (203), each of them reads the Beacon Message (301), which at that instant is being emitted by the concentrator device (2) in a Beacon Emission state (105), and which contains the value of the time remaining, in milliseconds, until the start of the next measurement, said time being stored in each measuring apparatus (1), and it being the time, the same for all of them with millisecond resolution, for which they will remain in the Rest State (100),

3. The process according to claim 1, **characterized in that**, in the Beacon Reading Phase (103) in the measuring apparatuses (1), in addition to reading the information contained in the Beacon Message (301) broadcast by the concentrator device (2), each measuring apparatus (1) starts the repeated emission of an FC message (303) toward the concentrator device (2) such that, if this message is received and correctly interpreted by the concentrator device (2) that is in a Read Measurement state (107), the latter determines that the measuring apparatus (1) is operational and, therefore, must await reception of its measurement data, and if it is not received, the concentrator device (2) determines that the measuring apparatus (1) is not operational and, therefore, will not take it into account,

4. The process according to claims 1 and 3, **characterized in that** the NOW Message (302) emitted by the concentrator device (2) in a NOW Message Emission state (106) to all the measuring apparatuses (1) represents, for all of them, the temporal reference, with nanosecond accuracy, for the start of emission, such that, once this message has been correctly received by all the measuring apparatuses (1) that are operational, and all of them already being in a Measurement Emission phase (104), they stop emitting the FC messages (303) and simultaneously start each emitting a Measurement Data message (304) toward the concentrator device (2), followed by the measurement data of each measuring apparatus (1), which the concentrator device (2) starts storing, in an orderly manner, in its internal memory,

5. A measuring apparatus (1) specifically designed to carry out the process of claim 1, **characterized in that** it comprises:
• A fiber-optic input block of the measuring apparatus (14),
• An optical-to-electrical input conversion block of the measuring apparatus (15),
• A deserializer block of the measuring apparatus (16), which performs the functions of data deserialization and recovery of the clock of the concentrator device (2) from which it receives,
• A secondary-clock generator block of the measuring apparatus (17), based on the clock recovered in the deserializer block of the measuring apparatus (16), for synchronizing the functional blocks involved in the transmission process,
• A microcontroller block of the measuring apparatus (19), for controlling the blocks,
• A message decoding block of the measuring apparatus (18), for providing error-free information to the microcontroller of the measuring apparatus (19),
• A clock block of the microcontroller of the measuring apparatus (20),
• A signaling/data switching block of the measuring apparatus (8), controlled directly by the message decoding block of the measuring apparatus (18), without intervention of the microcontroller block of the measuring apparatus (19),
• A power-supply regulator control block of the measuring apparatus (23), implemented in the microcontroller of the measuring apparatus (19), for controlling the switching on/off of the various power supplies in relation to the states in which the meter is found,
• A power-supply regulator block of the measuring apparatus (24),
• An analog-signal conditioning block of the measuring apparatus (5),
• A control block for conditioning the analog signal of the meter of the measuring apparatus (9) for high-frequency signals, for configuring the operating parameters of the measurement circuits of the analog input block of the measuring apparatus (4),
• An analog-to-digital conversion block, or ADC block, of the measuring apparatus (6),
• A control block of the ADC of the measuring apparatus (10),
• An energy block of the measuring apparatus (22), for providing an autonomous energy source, such as a small battery,
• A signaling/data switching block of the measuring apparatus (8), controlled directly by the message decoding block of the measuring apparatus (18), without intervention of the microcontroller of the measuring apparatus (19),
• A signaling generator block of the measuring apparatus (7), to be sent to the concentrator device through the signaling/data switching block of the measuring apparatus (8),
• A cyclic reset block (21), independent of the control of the microcontroller block of the measuring apparatus (19), for providing a safety mechanism in the event of a loss-of-control situation,
• A serialization block of the measuring apparatus (11),
• A fiber-optic output block of the measuring apparatus (13),
• An electrical-to-optical output conversion block of the measuring apparatus (12).

6. The measuring apparatus (1) according to claim 5, **characterized in that** the secondary-clock generator block of the measuring apparatus (17) generates all the clocks responsible for sampling the analog signal and for transmitting and serializing the information toward a concentrator device (2), which clocks will be multiples or submultiples of the recovered clock and which enable the system as a whole to operate with a single clock and to have nanosecond accuracy.

7. A concentrator device (1) specifically designed to carry out the process of claim 1, **characterized in that** it comprises:
• A reception block of the concentrator device (29) for each data-reception channel of each measuring apparatus (1) interconnected with the concentrator device (2), which in turn comprises,
- A fiber-optic input block of the concentrator device (25),
- An optical-to-electrical input conversion block of the concentrator device (26),
- A deserializer block of the concentrator device (27),
- A message/data decoder block of the concentrator device (28),
• An emission block of the concentrator device (34) for each data-transmission channel from the concentrator device to each meter connected thereto, which in turn comprises,
- A fiber-optic output block of the concentrator device (31),
- An electrical-to-optical output conversion block of the concentrator device (32),
- A data serializer block of the concentrator device (33),
• A microprocessor block of the concentrator device (40),
• A sample packaging block of the concentrator device (30), for structuring the samples received from the meters before insertion into memory,
• A memory block of the concentrator device (37), for storing the information arranged in each reception block of the concentrator device (29) and the status and control information of the concentrator device,
• A direct memory access (DMA) block for measurement input to memory (36) and for managing the transfer of the information held by the sample packaging block of the concentrator device (30) to the memory block of the concentrator device (37), with control of this block being performed through the microprocessor block of the concentrator device (40),
• A signaling generation block of the concentrator device (35), for preparing the protocol to be used in the transmission/coding between the concentrator device (2) and measuring apparatuses (1), enabling clock recovery by the measuring apparatuses (1) through the deserializer block of the measuring apparatus (16), and for sending, to each emission block of the concentrator device (34), the signaling and control information to the measuring apparatuses (1), this information being the same for all these blocks (34) and related to the operating mode of the system, including a time reference indicating when the next measurement will be performed, an immediate measurement-start message and information relating to configuration of the analog stages of each meter for the analog-signal conditioning block of the measuring apparatus (5),
• A synchronizer block of the concentrator device (41), for providing synchronization functions to the signaling generator block of the concentrator device (35),
• An external time-signal block of the concentrator device (43), in UTC format, for the signaling generator block of the concentrator device (35),
• A clock generator block of the concentrator device (42) for the signaling generator block of the concentrator device (35) and the sample packaging block of the concentrator device (30),
• A DMA block for external-interface access of the concentrator device (38),
• An external-access interface block of the concentrator device (39).

8. The concentrator device (2) according to claim 7, **characterized in that** the sample packaging block of the concentrator device (30) comprises an information-processing block, sample by sample, such that each data packet will contain all the samples of all the meters arranged through four inputs of the analog input block (4) at a specific time instant, and performs detection of the start of arrival of the measurement data from each meter, and precisely determines, based on the instant at which it previously ordered performance of the measurement, the delay/offset in the arrival of the data from each meter, directly related to the length of the fiber-optic interconnection (3) (which may be different for each meter), these time offsets subsequently being used by the microprocessor block of the concentrator device (40) to establish a single time base for all the measurements.

9. An electronic system comprising one or more measuring apparatuses (1) according to claim 5, a concentrator device (2) according to claim 7 and a fiber-optic interconnection (3) between the latter and each of the former, with a star topology, **characterized in that** all the measuring apparatuses (1) perform measurements of high-frequency analog signals (up to tens of MHz) synchronized with one another with nanosecond accuracy, and all of them transmit the measurement data in real time to the concentrator equipment (2),

10. The measuring apparatus (1) according to claim 5, **characterized in that** it comprises:
• The analog-signal conditioning block (5) for each analog input block of the measuring apparatus (4), a low-noise differential amplifier model LTC6403 (44), followed by a variable-gain amplifier model AD8330 (45), with a bandwidth of 20 MHz,
• The ADC block of the measuring apparatus (6), comprising a four-channel, 12-bit ADC (Analog Digital Converter), with a sampling frequency of 50 MSPS and serialized digital output, model AD9633 (46),
• The signaling/data switching block of the measuring apparatus (8), signaling generator of the measuring apparatus (7), serialization of the measuring apparatus (11), deserializer of the measuring apparatus (16), message decoder of the measuring apparatus (18) and secondary-clock generator of the measuring apparatus (17) blocks included within an FPGA of the measuring apparatus, model M2GL010T (47),
• The fiber-optic input block of the measuring apparatus (14), optical-to-electrical input conversion block of the measuring apparatus (15), fiber-optic output block of the measuring apparatus (13) and electrical-to-optical output conversion block of the measuring apparatus (12) included within an SFP+ module/interface (48),
• The microcontroller block of the measuring apparatus (19) comprises an 8-bit microcontroller, model EFM8 (50) of the 'Sleepy Bee' series, and a DAC digital-to-analog converter, model MCP48FVB08 (53), and performs the functions of the ADC control block of the measuring apparatus (10), analog-signal conditioning control of the measuring apparatus (9), and power-supply regulator control of the measuring apparatus (23),
• The clock block of the microcontroller of the measuring apparatus (20) comprises a SiT1533 (54) component with a time drift compatible with all the measuring apparatuses (1) leaving the rest state (100) simultaneously within a range of milliseconds,
• The cyclical reset block (21) comprises a low-consumption CPLD, model SLG46824V (49),
• A system for transmitting/coding information through 8B10B coding.

11. The concentrator device (2) according to claim 7, **characterized in that** it comprises:
• The deserializer block of the concentrator device (27), message/data decoder of the concentrator device (28), sample packaging block of the concentrator device (30), data serializer of the concentrator device (33), signaling generator of the concentrator device (35), DMA for measurement input to memory (36), DMA for external-interface access of the concentrator device (38), microprocessor of the concentrator device (40), synchronizer of the concentrator device (41), clock generator of the concentrator device (42) and external-access interface of the concentrator device (39) blocks included within an FPGA, Arria 10 (55), which has 24 interfaces for transceivers compatible with the protocol and coding used to transmit to and receive from the meters, of which up to 22 will be used to perform the fiber-optic interconnection (3) with other measuring apparatuses (1),
• The external-access interface block of the concentrator device (39), of the PCIe (57) type with two lanes (PCIe x2), included within the two remaining interfaces of the Arria 10 FPGA (55),
• The fiber-optic input block of the concentrator device (25), optical-to-electrical input conversion block of the concentrator device (26), fiber-optic output block of the concentrator device (31) and electrical-to-optical output conversion block of the concentrator device (32) included within SFP+ modules (48),
• The memory block of the concentrator device (37), included in DDR-type memory circuits,
• The UTC external time-signal input block (43), comprising a physical interface for optionally integrating an external clock signal,
• A system for transmitting/coding information through 8B10B coding.

12. A concentrator device (2), **characterized in that** it comprises all the elements of claim 11 and:
• A central processing block (58), comprising a PC-type system or any other system with a PCIe interface in Root mode, incorporating a PCIe (57) interface block.
